# EUROPÄISCHE PATENTSCHRIFT

(11) **EP 3 500 398 B1**
(45) Veröffentlichungstag und Bekanntmachung des Hinweises auf die Patenterteilung: **24.03.2021**
(21) Anmeldenummer: 17780675.9
(22) Anmeldetag: 27.09.2017
(51) Int. Cl.: B23Q 1/03

(54) **AUFNAHMEVORRICHTUNG ZUM AUFNEHMEN EINES BELIEBIG GEFORMTEN OBJEKTS**
ACCOMMODATING APPARATUS FOR ACCOMMODATING AN OBJECT OF ANY DESIRED SHAPE
DISPOSITIF D'ACCUEIL DESTINÉ À ACCUEILLIR UN OBJET DE FORME QUELCONQUE

(30) Priorität: 28.09.2016 DE 102016218750
(43) Veröffentlichungstag der Anmeldung: 26.06.2019
(73) Patentinhaber: Fraunhofer-Gesellschaft zur Förderung der angewandten Forschung e.V., 80686 München (DE)
(72) Erfinder: ACKERT, Patrick, 01159 Dresden (DE)
(74) Vertreter: Pfenning, Meinig & Partner mbB
(86) Internationale Anmeldenummer: PCT/EP2017/074489
(87) Internationale Veröffentlichungsnummer: WO 2018/060244

(56) Entgegenhaltungen:
- EP-A1- 0 507 033
- WO-A1-2013/083900
- WO-A1-2016/139584
- DE-U1-202015 102 943
- US-A- 5 026 033
- US-A1- 2008 127 474
- US-A1- 2010 327 506

## Beschreibung

Die vorliegende Erfindung betrifft eine Aufnahmevorrichtung zum Aufnehmen eines beliebig geformten Objekts.

Sogenannte Bestimmvorrichtungen ermöglichen es, ein oder mehrere Objekte im Raum ortsfest zu positionieren, um so u.a. Spann-, Analyse- oder Fügeoperationen wiederholgenau durchführen zu können. Zur Positionierung werden dabei vor allen Auflagen, Spannelemente und Stifte verwendet.

Im Karosseriebau sind Maßhaltigkeitsanalysen notwendig, um eine Qualitätsentwicklung über jeden einzelnen Prozessschritt hinweg beurteilen zu können. Bei Messvorrichtungen nach konventionellem Aufbau erfolgt die Messung taktil oder optisch, wobei Einzelteile, Baugruppen oder Anbauteile in der späteren Einbaulage am Endprodukt positioniert werden. So offenbart beispielsweise die Druckschrift DE 20 2015 101467 U1 einen Systembaukasten zum Aufbau von Vorrichtungen zum Aufspannen von Werkstücken mit quaderförmigen Grundkörpern samt Anbauplatten. Bisher bestehende Messvorrichtungen verursachen jedoch trotz Komponenten- bzw. Kastenbauweise wiederkehrende Kosten, beispielsweise in Form von Lagerkosten, Kosten für Wiederbeschaffung oder Rüst- und Einmessvorgängen, da für jedes Bauteil eine spezielle Messvorrichtung benötigt wird. Weiterhin besteht zum Beispiel in der Automobilindustrie das Problem einer zunehmenden Anzahl an Fahrzeugmodellen und -derivaten. Dadurch steigen die Anzahl an Karosseriebauteilen und -gruppen, sowie die Anzahl der notwendigen Messvorrichtungen. Ebenso erhöht sich die Anzahl an Rüstvorgängen, der Platzbedarf nimmt zu und somit steigen in Summe die Kosten für die Qualitätsprüfung.

Die gattungsgebende Druckschrift DE 20 2015 102 943 U1 befasst sich mit einer Stützeinrichtung für Bauteile mit einem Drehpositionierer. Aus der Druckschrift
WO 2016/139584 A1 ist eine Haltevorrichtung bekannt, bei der ein linear verfahrbarer Aktuator vorgesehen ist.

Der vorliegenden Erfindung liegt daher die Aufgabe zugrunde, eine Aufnahmevorrichtung vorzuschlagen, die die genannten Nachteile vermeidet, mit der also eine hohe Flexibilität erreichbar ist und beliebig geformte Einzelteile, Baugruppen oder Anbauteile aufgenommen und gehalten werden können.

Diese Aufgabe wird erfindungsgemäß gelöst durch eine Aufnahmevorrichtung nach Anspruch 1. Vorteilhafte Ausgestaltungen und Weiterbildungen sind in den abhängigen Ansprüchen beschrieben.

Eine Aufnahmevorrichtung zum Aufnehmen eines beliebig geformten Objekts weist einen Grundrahmen und mindestens ein erstes, an dem Grundrahmen angeordnetes Grundträgerlager auf. Das Grundträgerlager verfügt über mindestens zwei Führungen, auf denen mindestens ein erster Grundträger auf einer ersten Trägerverfahreinheit über einen ersten Grundträgerantrieb verfahrbar ist und ein zweiter Grundträger auf einer zweiten Trägerverfahreinheit über den ersten Grundträgerantrieb oder über einen zweiten Grundträgerantrieb verfahrbar ist. Ein auf einer dritten Trägerverfahreinheit angeordneter dritter Grundträger ist auf dem ersten Grundträgerlager durch einen dritten Grundträgerantrieb, durch den ersten Grundträgerantrieb oder durch den zweiten Grundträgerantrieb verfahrbar oder der dritte Grundträger ist auf einem zweiten an dem Grundrahmen angeordneten Grundträgerlager mit zwei Schienen auf einer dritten Trägerverfahreinheit angeordnet und durch den dritten Grundträgerantrieb verfahrbar. An jedem der Grundträger ist ein Zwischenträgerlager angeordnet, entlang dessen ein Zwischenträger mit einer Zwischenträgerverfahreinheit mittels eines Zwischenträgerantriebs an dem jeweiligen Grundträger verfahrbar ist, wobei eine Anbindungsträgerverfahreinheit auf dem Zwischenträger angeordnet ist, durch die ein Anbindungsträgerlager mit einer stirnseitigen Werkzeugaufnahme durch einen Anbindungsantrieb verfahrbar ist, so dass das beliebig geformte Objekt stets durch mindestens drei an den Werkzeugaufnahmen der Träger angeordnete Bestimmelemente aufnehmbar ist. In weiteren Ausführungsformen kann wenigstens eines der Grundträgerlager lediglich eine Führung aufweisen, auf der einer der Grundträger verfahrbar ist.

Der Grundrahmen ist in Kastenbauweise mit einer Führung für Medien über Kabel und Schläuche im Inneren in der Vertikalen auf einem Unterbau aus zwei Sockeln gelagert.

Durch drei sogenannte Bestimmstellen, an denen das beliebig geformte Objekt, beispielsweise ein zu behandelndes Bauteil, gehalten wird, ist stets eine zuverlässige Halterung mittels dreier Werkzeug oder Bestimmelemente in einer Aufnahmevorrichtung bzw. einer Bestimmvorrichtung für Mess-, Spann- oder Fügeoperationen möglich. Indem die Werkzeugaufnahmen durch die verfahrbaren Grundträger, Zwischenträger und Werkzeugaufnahmen in drei Raumrichtungen bewegt werden können, ist eine einfache Anpassung an verschiedene Geometrien zu haltender Objekte möglich. Hierbei können die mindestens drei zum Einsatz kommenden Grundträger auf einem einzigen Grundträgerlager verfahren werden, es kann aber auch wenigstens einer der Grundträger auf dem zweiten Grundträgerlager bewegt werden, um eine größtmögliche Flexibilität zu gewährleisten. Nicht benötigte Grundträger können beispielsweise außerhalb eines Arbeitsbereichs gelagert und bei Bedarf montiert oder in einen Arbeitsbereich eingefahren werden. Bei mehr als drei eingesetzten Grundträgern können natürlich auch beide Varianten miteinander kombiniert werden. Durch die Anordnung an einem Grundrahmen wird eine mechanische Stabilität gegen wirkende Kräfte und eine Steifigkeit erhöht. Typischerweise werden die Grundträgerantriebe, die Zwischenträgerantriebe und die Anbindungsantriebe teilautomatisiert oder vollautomatisiert verfahren. Hierzu ist typischerweise eine Steuereinheit vorgesehen, die mindestens eine der genannten Antriebsvorrichtungen, vorzugsweise alle Antriebsvorrichtungen, ansteuert und automatisiert verfährt. Die Grundträgerlager können auch auf mindestens einer an dem Grundrahmen angeordneten Basisplatte angeordnet sein.

Die Trägerverfahreinheit und bzw. oder die Zwischenträgerverfahreinheit können mindestens ein, vorzugsweise aber zwei bewegliche Elemente wie Schlitten aufweisen.

Zumindest einer der Grundträgerantriebe, der Zwischenträgerantrieb und der Anbindungsantrieb kann derart angeordnet und ausgebildet sein, dass der Grundträger, die Zwischenträgerverfahreinheit und bzw. oder die Werkzeugaufnahme unter einem von 0° verschiedenen Winkel zueinander in einer linearen Bewegung verfahrbar sind. Typischerweise sind die Grundträger jeweils parallel zueinander verfahrbar, ebenso wie die Zwischenträgerverfahreinheiten parallel zueinander verfahrbar sind und die Werkzeugaufnahmen bzw. Anbindungsträgerverfahreinheiten parallel zueinander verfahrbar sind, um einen möglichst einfachen und kompakten Aufbau zu erhalten.

Es kann vorgesehen sein, dass die Grundträgerlager, die Zwischenträgerlager und die Anbindungsträgerlager unter einem Winkel zwischen 70° und 110°, vorzugsweise 80° und 100°, besonders vorzugsweise 90° zueinander ausgerichtet und angeordnet sind. Somit ergibt sich eine überschaubare Anordnung, bei denen die einzelnen Elemente senkrecht aufeinander stehen und eine Verfahrbarkeit entlang dreier rechtwinklig aufeinander stehender Raumachsen möglich ist.

Um eine Rotation zu ermöglichen, kann mindestens eine der Werkzeugaufnahmen um eine Drehachse drehbar ausgestaltet sein, wobei ein auf die Werkzeugaufnahme aufgebrachtes Bestimmelement vorzugsweise derart angeordnet ist, dass sein Kontakt zum Objekt außerhalb der Drehachse liegt. Es kann auch alternativ oder zusätzlich vorgesehen sein, dass ein auf die Werkzeugaufnahme aufgebrachtes Bestimmelement derart angeordnet ist, dass sein Kontakt zum Objekt außerhalb einer Längsachse liegt. Die Drehachse kann somit sowohl zentrisch als auch außerzentrisch zur Werkzeugaufnahme angeordnet sein, worunter insbesondere verstanden werden soll, dass die Drehachse bei außerzentrischer Anordnung die Werkzeugaufnahme nicht schneidet. Bei zentrische Anordnung soll generell die Drehachse die Werkzeugaufnahme schneidet und vorzugsweise parallel zu einer der Hauptträgheitsachsen der Werkzeugaufnahme verlaufen oder identisch zu einer dieser Achsen sein.

Zur weiteren Flexibilisierung der Aufnahmevorrichtung ist es möglich, an mindestens einem der Anbindungsträgerlager und bzw. oder einem Anbindungsträger eine Feinjustageeinheit anzubringen. Diese kann in Form eines Schiebers als Linearachse, als starrer Träger, der sich mittels Rotation zum Anbindungsträgerlager bzw. zum Anbindungsträger verdrehen lässt, oder als Kombination der Linearachse und des Trägers realisiert werden. Hierbei soll unter einer "stirnseitigen Werkzeugaufnahme" insbesondere eine in Richtung der Feinjustageeinheit ausgerichtete Werkzeugaufnahme verstanden werden. Die Feinjustageeinheit kann ebenfalls teilautomatisiert oder vollautomatisiert verfahren werden.

Die Werkzeugaufnahme kann dazu ausgebildet sein, eine Spannvorrichtung, insbesondere einen Konturspanner, einen Permanentmagneten, einen Elektromagneten und bzw. oder einen Stift zum Aufnehmen des zu haltenden Objekts aufzuweisen. Vorzugsweise ist das Bestimmelement, also das Element, das das Objekt hält, als Stift, Auflage mit oder ohne Spannmöglichkeit oder Stift-Auflage-Kombination vorgesehen. Die Werkzeugaufnahme kann auch als Kugelkörper, der in einem Körper schwenkbar gelagert ist, realisiert sein. Der Kugelkörper kann an einer Seite abgeflacht sein oder als Vollkugel vorliegen, der punktförmig an einer Spannstelle anliegt und ein entsprechendes Gegenstück als Klemmelement aufweist.

Alternativ oder zusätzlich kann die Werkzeugaufnahme und bzw. oder ein aufgenommenes Werkzeug pneumatisch, hydraulisch oder elektromotorisch betätigbar ausgestaltet sein. Zudem kann die Werkzeugaufnahme derart ausgestaltet sein, dass zum Betätigen benötigte Medien bis zu dem Objekt führbar sind.

Zumindest einer der Grundträgerantriebe, der Zwischenträgerantrieb und bzw. oder der Anbindungsantrieb können als spindelförmiger Antrieb, insbesondere als Kugelumlaufspindelantrieb, vorzugsweise als servomotorischer oder schrittmotorbasierter Kugelumlaufspindelbetrieb, oder als Trapezgewindespindelantrieb, ausgestaltet sein, was eine kostengünstige und effiziente Möglichkeit des Antriebs darstellt. Die Ausgestaltung als Trapezgewindespindelantrieb ist vorteilhaft, da der Antrieb selbsthemmend ist und somit Bremsen eingespart werden können. Alternativ kann auch ein linearkinematischer Antriebe, beispielsweise mittels eines Hubzylinders, einer Zahnstange oder eines Riementriebs, vorgesehen sein. Es können jedoch auch Servomotoren für den linearkinematischen Antrieb der Grundträger, der Zwischenträgerverfahreinheiten und der Werkzeugaufnahmen bzw. Anbindungsträgerverfahreinheiten vorgesehen sein. Ebenso kann vorgesehen sein, dass verschiedene Antriebstechniken für einzelne Einheiten verwendet werden, also beispielsweise die Träger mittels Kugelumlaufspindelantrieb verfahren werden, während Trapezgewindespindeln die Verfahreinheiten bewegen. Auch kann nur der erste Grundträger durch den Schrittmotor bewegt werden, während jeweils ein Servomotor jeweils einen der anderen Grundträger verfährt.

Es kann vorgesehen sein, dass an dem ersten Grundträgerlager dem zweiten Grundträgerlager, dem Zwischenträgerlager bzw. mindestens einem der Zwischenträgerlager, und bzw. oder dem Anbindungsträgerlager bzw. mindestens einem der Anbindungsträgerlager parallel zu der Führung ein Längenmesssystem und bzw. oder Positionsbestimmungssystem angeordnet ist, um einfacher die Position bzw. eine zurückgelegte Länge bestimmen zu können. Vorzugsweise wird hierfür ein magnetisches Längenmesssystem bzw. Positionsbestimmungssystem verwendet.

Um einen einfachen Aufbau der gesamten Vorrichtung zu erleichtern, sind zumindest das erste Grundträgerlager und das zweite Grundträgerlager typischerweise parallel zueinander angeordnet. Vorzugsweise sind zumindest das erste Grundträgerlager und das zweite Grundträgerlager räumlich voneinander getrennt bzw. beabstandet angeordnet und überlappen einander nicht.

Alle der zum Einsatz kommenden Grundträger können einen identischen Aufbau aufweisen, es kann jedoch auch mindestens einer der Grundträger einen von den weiteren Grundträgern verschiedenen Aufbau und bzw. oder eine von den weiteren Grundträgern verschiedene Größe aufweisen.

Der Grundrahmen kann zwischen 20 cm breit bzw. hoch und 6 m, vorzugsweise 2 m, breit bzw. hoch sein, um eine Vielzahl unterschiedlicher Objekte halten zu können.

Es kann vorgesehen sein, dass mindestens einer der Grundträger abstandsfrei bis zu einem Rand des Grundrahmens verfahrbar ist. Ebenso kann mindestens einer der Zwischenträger abstandsfrei bis zu einem Rand des Grundträgers verfahrbar ausgestaltet sein, so dass eine nahtlose, also abstandsfreie Kopplung mehrerer Grundträger möglich ist.

Ausführungsbeispiele der Erfindung sind in den Zeichnungen dargestellt und werden nachfolgend anhand der Figuren 1 bis 11 erläutert.

Es zeigen:
- Fig. 1: eine perspektivische Ansicht einer Aufnahmevorrichtung mit einer gehaltenen Autotür;
- Fig. 2: eine vergrößerte Darstellung eines Grundträgerlagers;
- Fig. 3: einen einzelnen Grundträger mit Zwischenträger und Anbindungsträger in perspektivischer Darstellung;
- Fig. 4: eine Draufsicht auf den Grundträger;
- Fig. 5: der Anbindungsträger mit Werkzeugaufnahme in einer perspektivischen Ansicht;
- Fig. 6: eine Draufsicht auf drei miteinander verbundene Aufnahmevorrichtungen mit einen gehaltenen Bauteil;
- Fig. 7: eine perspektivische Ansicht der Aufnahmevorrichtung mit einem Grundträgerantrieb je Grundträger;
- Fig. 8: eine perspektivische Ansicht der Aufnahmevorrichtung mit zwei Grundträgerantrieben je Grundträger;
- Fig. 9: eine Schnittansicht des Anbindungsträgers mit Zahnstange;
- Fig. 10: eine perspektivische Ansicht eines Trägerkopfs mit Feinjustageeinheit und
- Fig. 11: eine perspektvische Ansicht einer Kabelführung in einem Grundrahmen.

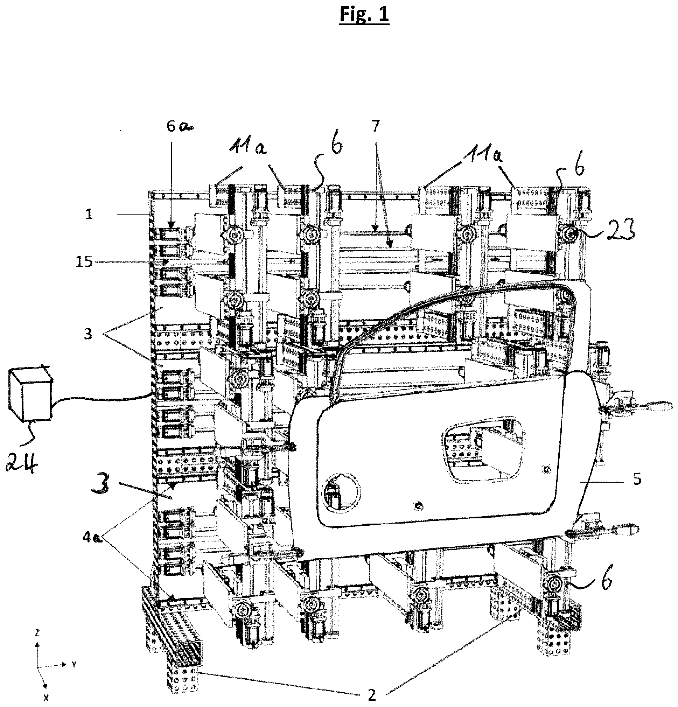

In Figur 1 ist in einer schematischen Ansicht eine Aufnahmevorrichtung gezeigt, die auch als Bestimmvorrichtung bezeichnet wird. In dem dargestellten Ausführungsbeispiel ist das von der Aufnahmevorrichtung aufgenommene und gehaltene Objekt 5 ein Türinnenrahmen einer Kraftfahrzeugkarosserie. Ein Rahmen 1 in Kastenbauweise mit einer Führung für Medien über Kabel und Schläuche im Inneren bildet die Grundkonstruktion der Aufnahmevorrichtung. Der Rahmen 1 weist im dargestellten Ausführungsbeispiel die Maße 2 m mal 2 m auf und ist auf einem Unterbau aus zwei Sockeln 2 gelagert, was ein Fixieren und Messen in einer Einbaulage am Objekt 5 als Endprodukt ermöglicht. Ein Kippen des Rahmens 1 in beliebigem Winkel ist durch Anpassung der Sockel 2 möglich, beispielsweise durch eine Höhenverstellung der Sockel 2. Die Sockel 2 sind in dem dargestellten Ausführungsbeispiel ebenfalls in Kastenbauweise gefertigt und verfügen über jeweils zwei Füße, so dass der Rahmen 1 in der Vertikalen gehalten wird.

In dem in Figur 1 dargestellten Ausführungsbeispiel sind insgesamt drei Basisplatten 3 festgelegter Größe mit dem Rahmen 1 fest verbunden. In weiteren Ausführungsbeispielen kann allerdings auch keine feste Verbindung zwischen den Grundplatten 3 und dem Rahmen 1 vorliegen. Die mittlere der drei Basisplatten 3 weist in dem gezeigten Ausführungsbeispiel eine geringere Höhe, also eine geringere Ausdehnung in z-Richtung in dem in Figur 1 ebenfalls dargestellten Koordinatensystem, auf als die beiden anderen Basisplatten 3. In weiteren Ausführungsbeispielen sind natürlich auch andere Größenverteilungen sowie eine andere Anzahl an Basisplatten 3 möglich. Die Basisplatten 3 können sowohl als Träger für auf ihnen angebrachte Profilschienenführungen als auch zum Erhöhen einer mechanischen Stabilität der Aufnahmevorrichtung dienen.

Auf jeder der Basisplatten 3 sind Grundträgerlager 4a mit mindestens zwei Schienen in Form von Profilschienenführungen befestigt, die entlang der y-Achse parallel zueinander ausgerichtet sind und jeweils in einer an einem äußeren Rand der jeweiligen Basisplatte 3 liegenden Vertiefung liegen. Es ist natürlich auch möglich, andere Führungen zu verwenden. In weiteren Ausführungsbeispielen können die grundträgerlager 4a auch direkt, also in unmittelbarem, berührenden Kontakt ohne dazwischenliegende Basisplatten 3 auf dem Grundrahmen 1 befestigt sein.

In dem dargestellten Ausführungsbeispiel befinden sich auf jedem der Grundträgerlager 4a vier Trägerverfahreinheiten 11a, die auch als Portalverfahreinheiten bezeichnet werden können, in Form von Trägerverfahreinheitenpaaren, auf denen jeweils ein Grundträger 6 angeordnet ist, der auch als Portal bezeichnet wird. Diese Grundträger 6 sind separat verfahrbar. Es sollte möglichst ein Grundträgerlager 4a, das auch als Portallager bezeichnet werden kann, verwendet werden, das sowohl hohe Lasern aufnehmen kann, als auch eine hohe Genauigkeit erreicht. Zudem sollte es leichtgängig sein, eine hohe Steifigkeit aufweisen und Durchbiegungen vermeiden. Jeder der Grundträger 6 ist über einen am Rand einer der Basisplatten 3 angeordneten Grundträgerantrieb 6a bzw. Portalantrieb verfahrbar. In dem dargestellten Ausführungsbeispiel sind die Grundträger 6 nicht nur unabhängig voneinander verfahrbar, sondern auch parallel zueinander räumlich beabstandet auf den verschiedenen Grundträgerlagern 4a verfahrbar. Insbesondere können die Grundträger 6 auch in z-Richtung parallel zueinander angeordnet werden, wenn sie sich auf verschiedenen Grundträgerlagern befinden, so dass sich ein minimaler Abstand zwischen ihnen ergibt und somit das Objekt 5 einfach aufgenommen werden kann. Die Grundträgerantriebe 6a sind durch eine schematisch dargestellte elektrische oder elektronische Steuereinheit 24 ansteuerbar, haben eine beliebige Konstruktion und können, wie im in Figur 1 dargestellten Ausführungsbeispiel, einen Schrittmotor mit einer Spindel 7 aufweisen, der über die gesamte Länge der Basisplatte 3 reicht und mittels eines Flanschlagers auf der Antriebs- und Loslagerseite fixiert ist.

Indem auf jedem Paar der Schienenführungen eine Mehrzahl an Grundträgern 6 mittels der motorischen Grundträgerantriebe 6a über die Kugelumlaufspindeln 7 programmgesteuert geführt werden, können beliebige Ortslagen auf den Basisplatten 3 erreicht werden. Die Grundträger 6 bzw. Portale können alle identisch aufgebaut sein, jedoch kann auch mindestens einer der Träger in seinem Aufbau oder seiner Größe von den anderen Trägern abweichen. Wie bei dem Rahmen 1 werden in dem in Figur 1 dargestellten Ausführungsbeispiel Aluminiumhohlprofile für die Träger verwendet, da diese einen stabilen Aufbau ermöglichen und Hohlräume in den Profilen gleichzeitig zur Kabelführung genutzt werden können. Die Träger sind U-Förmig als Flächenträger ausgestaltet, können aber auch andere Bogenformen aufweisen. In dem in Figur 1 dargestellten Ausführungsbeispiel ist ein Magnetband 15 als Teil eines Positionsbestimmungssystems sparallel zu den Profilschienen auf einer der Basisplatten 3 angeordnet. Durch die in Figur 1 dargestellte Anordnung können die auf verschiedenen Basisplatten 3 geführten Grundträger 6 sich auch gegenseitig überholen, da jedes der Grundträgerlager 4a überlappungsfrei zu den weiteren Grundträgerlagern 4a ausgestaltet ist.

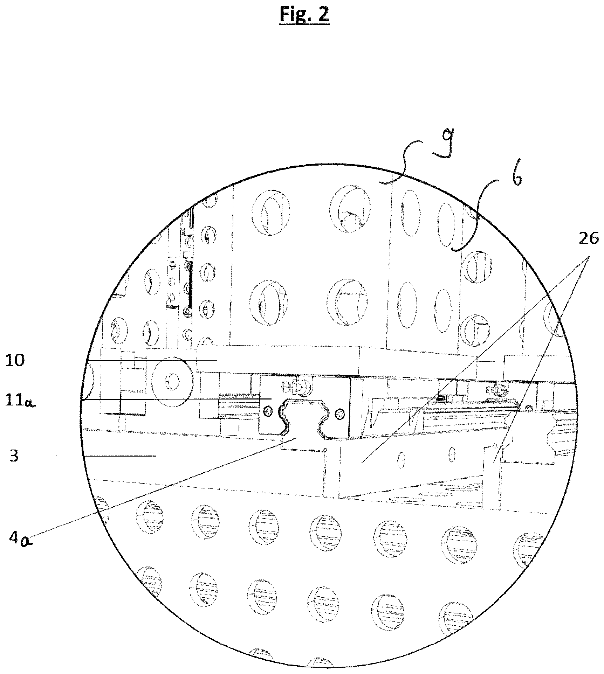

Figur 2 zeigt einen vergrößerten Ausschnitt des Grundträgerlagers 4a mit dem Grundträger 6. Wiederkehrende Merkmale sind in dieser Figur wie auch in den folgenden Figuren mit identischen Bezugszeichen versehen. In horizontaler Richtung, d. h. in dem in den Figuren 1 und 2 dargestellten Ausführungsbeispiel in y-Richtung, sind jeweils in einem Randbereich der Basisplatten 3 Anschläge 26 angebracht, die es ermöglichen, die Profilschienen des Grundträgerlagers 4a bei einer Montage zu positionieren. Auf dem Grundträgerlager 4a beweglich gelagert ist ein Profilwagen als Trägerverfahreinheit 11a, auf der eine Adapterplatte 10 und ein Trägerfuß 9 bzw. ein Portalfuß aufsitzt.

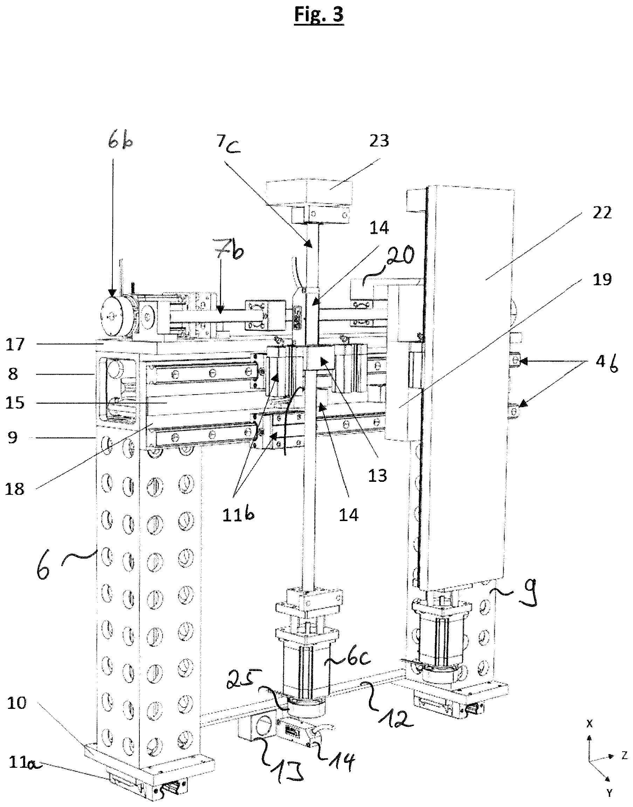

In Figur 3 ist ein kompletter Grundträger 6 in einer perspektivischen Ansicht dargestellt. Der gezeigte Grundträger 6 besteht in diesem Ausführungsbeispiel aus einem als Querträger ausgebildeten Trägerkopf 8 oder Portalkopf mit einer definierten, an die Breite der jeweiligen Basisplatte 3 angepassten Länge. Der Trägerkopf 8 liegt bündig auf zwei Säulen auf, die den Trägerfuß 9 bilden und fest bzw. formschlüssig oder kraftschlüssig mit dem Trägerkopf 8 verbunden sind.

Über eine Verbindungsplatte 12, die auf einer Oberseite der am Trägerfuß 9 angebrachten Adapterplatten 10 befestigt ist, kann der gesamte Träger mittels eines mit der Kugelumlaufspindel 7 verbundenen, an einer Unterseite der Verbindungsplatte 12 angebrachten Spindelmutter in entsprechendem Gehäuse 13 angetrieben werden. In dem in den Figuren 1 bis 3 dargestellten Ausführungsbeispiel ist an jeder der Verbindungsplatten 12 zusätzlich ein externes Längenmesssystem bzw. Positionsbestimmungssystem mit einem über einen Winkel 25 befestigten Sensor 14 angeordnet, das durch eine direkte berührungslose Messung über das Magnetband 15 eine exakte und wiederholgenaue Positionierung der Träger auf der Aufnahmevorrichtung ermöglicht. Ein Messsignal dieses Längenmesssystems kann hierbei auch an die Steuereinheit 24 weitergeleitet werden, so dass die Steuereinheit 24 basierend auf diesem Signal die Träger verfährt.

Um eine Bewegung von auf dem Trägerangebrachten Werkzeugaufnahmen in einer vertikalen Ebene, also in z-Richtung, zu ermöglichen, findet eine Linearkinematik auf dem Trägerkopf 8 Anwendung. Auf einer Oberseite des Trägerkopfs 8 ist eine ihren Abmessungen nach gerade den Abmessungen der Oberseite des Trägerkopfs 8 entsprechende Adapterplatte 17 angeordnet, auf der sich zwei einander entgegengesetzt angebrachte Zwischenträgerantriebe 6b befinden. Jeder der Zwischenträgerantriebe 6b hat eine Gesamtlänge, die gerade einer Länge des Trägerkopfs 8 entspricht und weist einen Motor, beispielsweise einen Schrittmotor, samt einer in einem Flanschlager 16 auf der Antriebs- und Loslagerseite gelagerten Kugelumlaufspindel 7 auf. Im rechten Winkel zum Zwischenträgerantrieb 6b, also an einer Grundträgerfront, ist eine weitere Adapterplatte 18 befestigt, an der ein über die gesamte Länge parallel zueinander verlaufendes, mit einem vorgegebenen Abstand zu einer Außenseite der Adapterplatte 18 liegendes Paar Profilschienen als Zwischenträgerlager 4b, das in der dargestellten Ausführungsform auch als Laufkatzenlager bezeichnet werden kann, angebracht ist. Auch auf dieser Adapterplatte 18 befindet sich wieder eines der Magnetbänder 15 für das Längenmesssystem, das wie bereits beschrieben auch in Zusammenarbeit mit der Steuereinheit 24 funktionieren kann.

Auf jeder der beiden an der Trägerfront angeordneten Profilschienen verfahren zwei Profilwagen als Zwischenträgerverfahreinheiten 11b in z- Richtung, die auch als Laufkatzenträger bezeichnet werden können. Die Zwischenträgerverfahreinheiten 11b können hierbei bis an den Rand der Adapterplatte 18 verfahren werden, also auch einander gegenüberliegende Endpunkte dieser Adapterplatte 18 erreichen. Hierdurch kann eine lückenlose Verbindung nebeneinander angeordneter Grundträger 6 erreicht werden.

Auf einer gegenüberliegenden Seite des Zwischenträgers befinden sich zwei weitere Anbindungsträgerverfahreinheiten 11c, die auch als Teleskopträger bezeichnet werden können, um 90° zu den Zwischenträgerverfahreinheiten 11b versetzt, sowie eine Spindelmutter im eigenen Lager 13.

Die Anbindungsträgerverfahreinheiten 11c dienen als Führung für das Anbindungsträgerlager 4c, das gemeinsam mit der Kugelumlaufspindel 7 an einem Anbindungsträger 22 befestigt ist und eine Translation des Anbindungsträgers 22 sowie der stirnseitig angebrachten Werkzeugaufnahme 23 durch den Anbindungsträgerantrieb 6c ermöglicht. Die Werkzeugaufnahme 23 ist dazu ausgebildet, flexibel verschiedene Werkzeuge aufnehmen zu können. Das Anbindungsträgerlager 4c kann alternativ auch als Teleskoplager bezeichnet werden.

Der Motor für die Ausführung dieser Bewegung liegt hierbei an einer der Werkzeugaufnahme 23 an einem oberen Rand des Anbindungsträgers 22 entgegengesetzten Ende des Anbindungsträgers 22. Das Grundträgerlager 4a, die Zwischenträgerlager 4b und Anbindungsträgerlager 4c stehen somit jeweils senkrecht aufeinander.

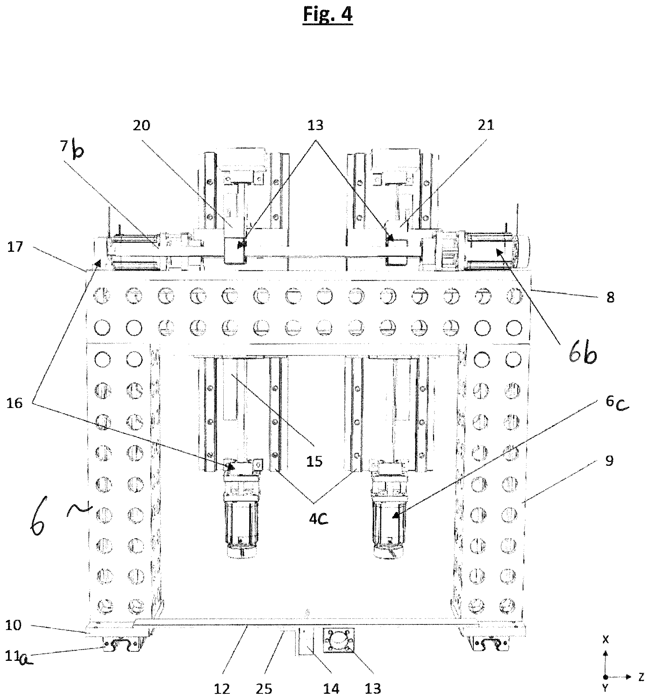

Figur 4 zeigt in einer Draufsicht diese Anordnung. Eine zweite Laufkatze wird in gleicher Weise über einen kurzen Verbindungsaufsatz 21 angetrieben, indem dieser wie auch bei einer ersten Laufkatze an der Oberseite der Adapterplatte 19 der Laufkatze befestigt und in dem dargestellten Fall mit dem Spindelmuttergehäuse 13 der vorderen Kugelumlaufspindel 7 verbunden ist.

Bei dem in den Figuren 1 bis 4 dargestellten Ausführungsbeispiel sind zur Bewegung in x-Richtung an einer äußeren oberen Ecke und auf der mit der Aussparung versehenen Seite des Zwischenträgers 19 die beiden Profilwagen starr angebracht. Mittig am oberen Rand der Aussparung des Zwischenträgers 19 ist das Spindelmuttergehäuse 13 für die Kugelumlaufspindel 7 ebenfalls fest und unbeweglich an den Zwischenträger 19 angebunden.

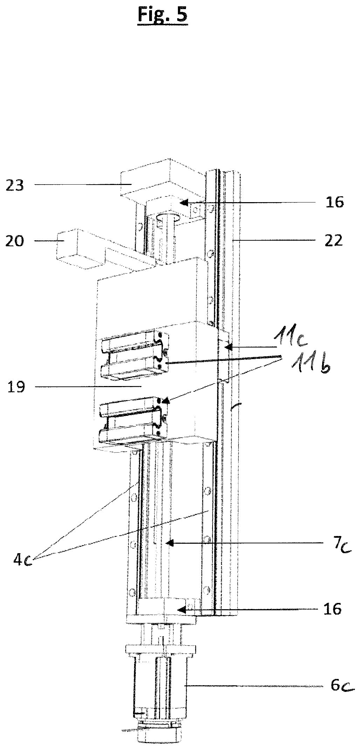

Figur 5 zeigt in einer perspektivischen Darstellung die bereits beschriebene Verfahreinheit 11b mit dem Zwischenträger und dem Anbindungsträger 22.

Die Aufnahmevorrichtung als Flächenportal ist in den dargestellten Figuren 1 bis 5 mit Aufnahme- und Spannelementen abgebildet, wobei als Grundlage ein Nullpunktsystem verwendet wurde, das mittig auf einer der Werkzeugaufnahmen 23 angebracht ist und ein schnelles Versetzen der verwendeten Spanner im rechten Winkel ermöglicht, um flexibel auf verschiedene Spannanforderungen reagieren zu können. Die Vorrichtung ist nicht auf das dargestellte Ausführungsbeispiel beschränkt, es können beispielsweise auf den Grundträgerlagern 4a auch weniger oder mehr Grundträger 6 angebracht oder je Grundträger 6 auch nur eine Laufkatze verwendet werden, um eine Flexibilität zu erhöhen. Weiterhin kann die Werkzeugaufnahme durch einen zusätzlichen Antrieb rotierbar und bzw. oder schwenkbar ausgeführt werden.

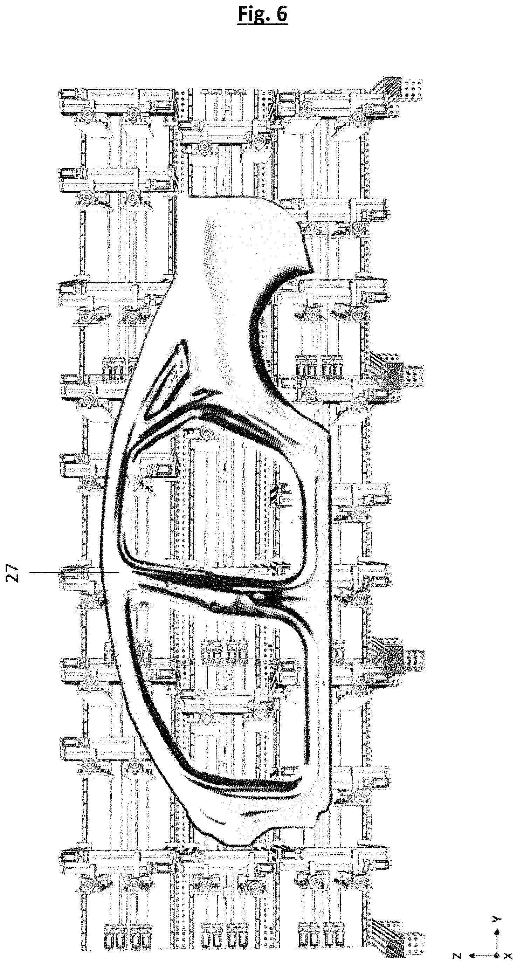

Figur 6 zeigt in einer Draufsicht ein weiteres Ausführungsbeispiel mit einem Seitenwandrahmen 27 einer Kraftfahrzeugkarosserie als zu haltendes Objekt 5. Um ein derartiges Bauteil aufzunehmen sind drei der in Figur 1 dargestellten Vorrichtungen miteinander zu einer großen Bestimmvorrichtung verbunden, was die Aufnahme größerer Werkstücke oder einer großen Anzahl von Werkstücken zur gleichen Zeit ermöglicht.

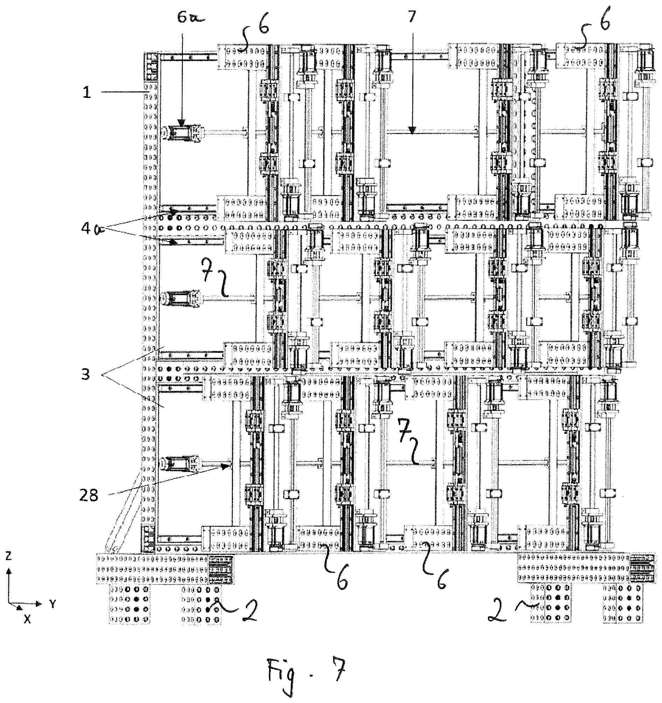

In Figur 7 ist in einer perspektivischen Ansicht ein Ausführungsbeispiel dargestellt, bei dem die Grundträger 6 wie zuvor verfahren werden können. Allerdings werden die Grundträger 6 nun nicht jeweils separat über eine eigene Spindel angetrieben, sondern alle Träger auf einer der Basisplatten 3 laufen über eine einzige, mittig zwischen den Grundträgerlagern 4a liegende Kugelumlaufspindel 7, die beispielsweise von einem Servomotor angetrieben werden kann. Auf der Adapterplatte 10 am Trägerfuß 9 wird in dem dargestellten Ausführungsbeispiel eine Verbindungsplatte 12 befestigt, auf deren Unterseite sich zentriert eine Spindelmutter als Verbindung zu der Kugelumlaufspindel 7 befindet, die je nach Bedarf im Spindelmuttergehäuse fest oder freigestellt werden kann.

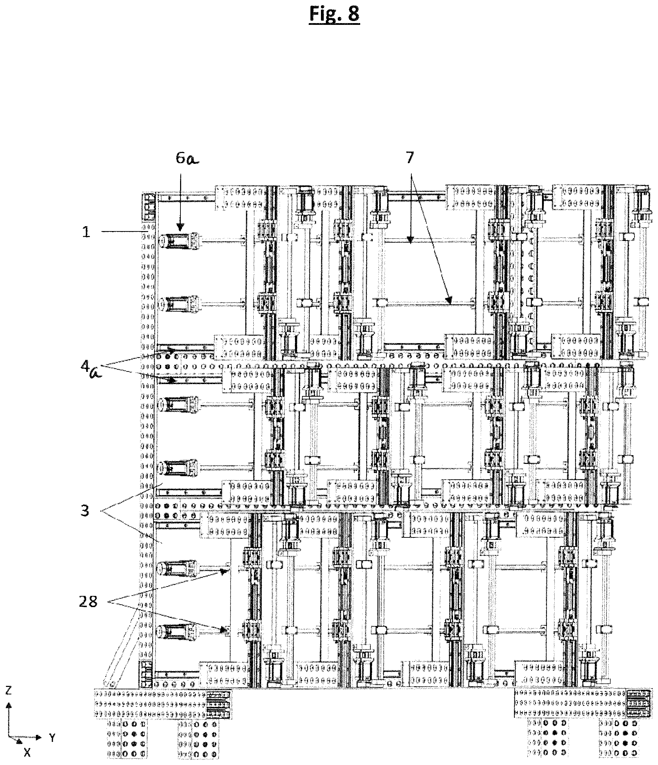

Figur 8 zeigt in einer Figur 7 entsprechenden Darstellung ein Ausführungsbeispiel, bei dem zwei Spindeln 7 für den Antrieb der Grundträger 6 verwendet werden, die beide über einen eigenen Motor, beispielsweise einen Synchronmotor, angetrieben werden. Alternativ ist eine Bauweise möglich, bei der nur eine der beiden Spindeln 7 über einen Motor verfügt und beide Spindeln über einen Riemen miteinander verbunden werden, wodurch eine gleichmäßige, gradlinige Bewegung entlang der y-Achse erfolgt.

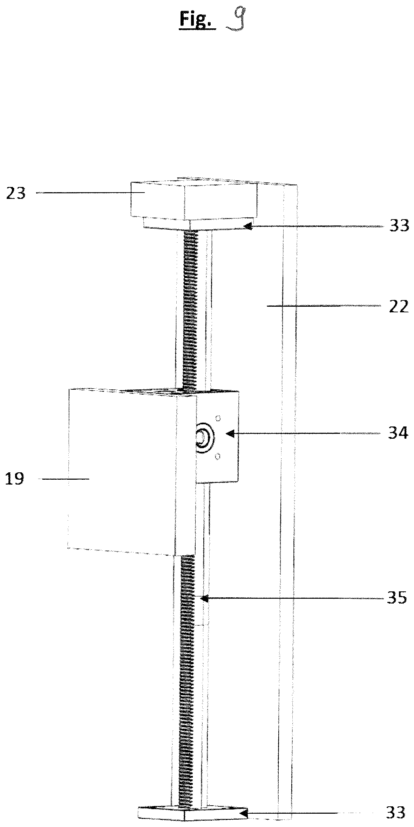

Figur 9 zeigt eine Laufkatze mit rund geführter Zahnstange. Ein Getriebeblock 34 ist hierbei an den Zwischenträgern 19 angebracht, der sowohl eine Führung für eine Rundzahnstange 35 als auch ein Getriebe mit Zahnrad umfasst und an dem ein Motor angebracht wird, um eine Rundzahnstange 35 entlang einer x-Achse anzutreiben. Über Halteplatten 33, die einander gegenüberliegend am Ende der Zahnstange 35 bündig zu einer Stirnfläche der Zahnstange 35 angebracht sind, kann eine Anbindung zum Anbindungsträger 22 und zur Werkzeugaufnahme 23 hergestellt werden.

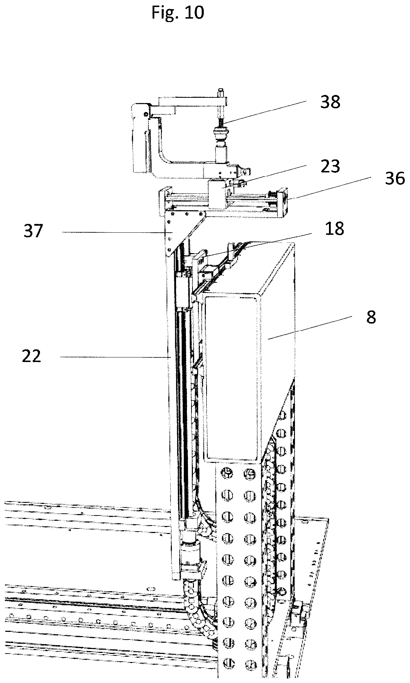

In Figur 10 ist in einer perspektivischen Ansicht ein Ausführungsbeispiel eines Trägerkopfs 8, der auch als Portalkopf bezeichnet wird, dargestellt, bei dem der Trägerkopf 8 den Zwischenträgerantrieb 6b beinhaltet und Möglichkeiten zur Kabelführung bietet. Die Zwischenträgerlager 4b und die Adapterplatte 18 sind wie bei dem in Figur 3 dargestellten Ausführungsbeispiel ausgeführt.

Abweichend zu dem in Figur 3 gezeigten Ausführungsbeispiel befindet sich zwischen dem Anbindungsträger 22 und der Werkzeugaufnahme 23 eine Feinjustageeinheit 36. Die Feinjustageeinheit 36 kann als Linearführung oder als Schieber ausgestaltet sein. Alternativ oder ergänzend kann an einem Verbinder 37, der die Feinjustageeinheit 36 und die Werkzeugaufnahme 23 verbindet, auch eine Kinematik für eine rotatorische Bewegung um den Anbindungsträger 23 angeordnet sein.

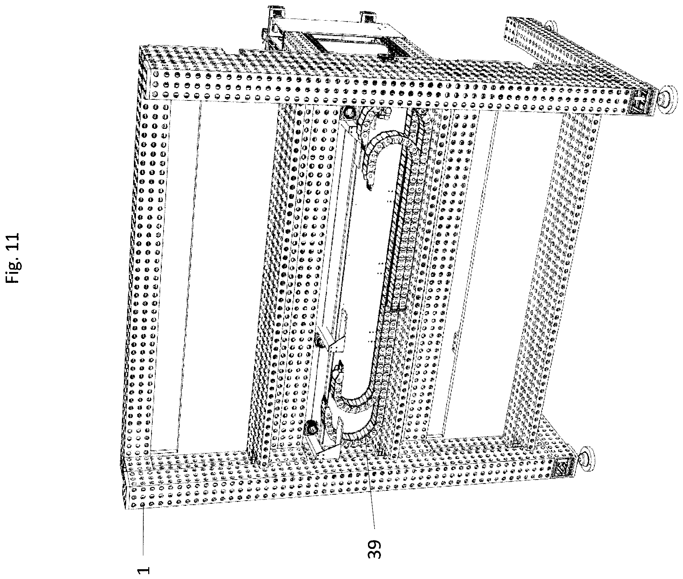

Die Werkzeugaufnahme 23 ist mittel 0-Punkt-Spannsystem flexibel ausgestattet und ermöglicht so einen Tausch und eine wiederholgenaue Aufnahme des Werkzeugs 38, das im dargestellten Ausführungsbeispiel ein Spanner ist. Figur 11 zeigt in einer perspektivischen Ansicht ein Ausführungsbeispiel des Grundrahmens 1 mit einer im Grundrahmen 1 verlaufenden Kabelführung 39.

## Patentansprüche

1. Aufnahmevorrichtung zum Aufnehmen eines beliebig geformten Objekts (5) mit einem Grundrahmen (1),
mindestens einem ersten an dem Grundrahmen (1) angeordneten Grundträgerlager (4a) mit zwei Führungen,
auf denen mindestens ein erster Grundträger (6) auf einer ersten Trägerverfahreinheit (11a), der über einen ersten Grundträgerantrieb (6a) verfahrbar ist, und
ein zweiter Grundträger (6) gelagert auf einer zweiten Trägerverfahreinheit (11a), der über den ersten Grundträgerantrieb (6a) oder über einen zweiten Grundträgerantrieb (6a) verfahrbar ist, wobei
ein auf einer dritten Trägerverfahreinheit (11a) angeordneter dritter Grundträger (5) auf dem ersten Grundträgerlager (4a) durch einen dritten Grundträgerantrieb (6a), durch den ersten Grundträgerantrieb (6a) oder durch den zweiten Grundträgerantrieb (6a) verfahrbar ist oder
der dritte Grundträger (6) auf einem zweiten an dem Grundrahmen (1) angeordneten Grundträgerlager (4a) mit zwei Führungen auf einer dritten Trägerverfahreinheit (11a) angeordnet und durch den dritten Grundträgerantrieb (6a) verfahrbar ist, wobei
an jedem der Grundträger (6) ein Zwischenträgerlager (4b) angeordnet ist, entlang dessen ein Zwischenträger (19) mit einer Zwischenträgerverfahreinheit (11b) mittels eines Zwischenträgerantriebs (6b) an dem jeweiligen Grundträger (6) verfahrbar ist, wobei eine Anbindungsträgerverfahreinheit (11c) auf dem Zwischenträger (19) angeordnet ist, durch die ein Anbindungsträgerlager (4c) mit einer stirnseitigen Werkzeugaufnahme (23) durch einen Anbindungsantrieb (6c) verfahrbar ist,
so dass das beliebig geformte Objekt (5) stets durch mindestens drei an den Werkzeugaufnahmen (23) der Grundträger (6) angeordnete Bestimmelemente aufnehmbar ist,
**dadurch gekennzeichnet, dass**
der Grundrahmen (1) in Kastenbauweise mit einer Führung für Medien über Kabel und Schläuche im Inneren in der Vertikalen auf einem Unterbau aus zwei Sockeln (2) gelagert ist.

2. Aufnahmevorrichtung nach Anspruch 1, **dadurch gekennzeichnet, dass** zumindest einer der Grundträgerantriebe (6a), der Zwischenträgerantrieb (6b) und der Anbindungsantrieb (6c) derart angeordnet und ausgebildet sind, dass der Grundträger (6), die Zwischenträgerverfahreinheit (11b) und/oder die Werkzeugaufnahme (23) unter einem von 0° verschiedenen Winkel zueinander in einer linearen Bewegung verfahrbar sind.

3. Aufnahmevorrichtung nach Anspruch 1 oder Anspruch 2, **dadurch gekennzeichnet, dass** das Grundträgerlager (4a), das Zwischenträgerlager (4b) und das Anbindungsträgerlager (4c) unter einem Winkel zwischen 70° und 110°, vorzugsweise 80° und 100°, besonders vorzugsweise 90° zueinander ausgerichtet und angeordnet sind.

4. Aufnahmevorrichtung nach einem der vorhergehenden Ansprüche, **dadurch gekennzeichnet, dass** mindestens eine der Werkzeugaufnahmen (23) um eine Drehachse drehbar ausgestaltet ist, wobei ein auf die Werkzeugaufnahme (23) aufgebrachtes Bestimmelement vorzugsweise derart angeordnet ist, dass ein Kontakt zum Objekt außerhalb der Drehachse liegt.

5. Aufnahmevorrichtung nach Anspruch 4, **dadurch gekennzeichnet, dass** die Drehachse zentrisch zur Werkzeugaufnahme (23) liegt.

6. Aufnahmevorrichtung nach einem der vorhergehenden Ansprüche, **dadurch gekennzeichnet, dass** an einem der Anbindungsträgerlager (4c) und einer zugeordneten Werkzeugaufnahme (23) eine Feinjustageeinheit (36) angeordnet ist.

7. Aufnahmevorrichtung nach einem der vorhergehenden Ansprüche, **dadurch gekennzeichnet, dass** die Werkzeugaufnahme (23) eine Spannvorrichtung, einen Permanentmagneten, einen Elektromagneten und/oder einen Stift zum Aufnehmen des zu haltenden Objekts (5) aufweist.

8. Aufnahmevorrichtung nach einem der vorhergehenden Ansprüche, **dadurch gekennzeichnet, dass** die Werkzeugaufnahme (23) und/oder ein aufgenommenes Werkzeug pneumatisch, hydraulisch oder elektromotorisch betätigbar ausgestaltet ist.

9. Aufnahmevorrichtung nach einem der vorhergehenden Ansprüche, **dadurch gekennzeichnet, dass** zumindest einer der Grundträgerantriebe (6a), der Zwischenträgerantrieb (6b) und/oder der Anbindungsantrieb (6c) als spindelförmiger Antrieb, insbesondere als Kugelumlaufspindelantrieb oder als Trapezgewindespindelantrieb, oder als linearkinematischer Antrieb ausgestaltet ist/sind.

10. Aufnahmevorrichtung nach einem der vorhergehenden Ansprüche, **dadurch gekennzeichnet, dass** an dem erste Grundträgerlager (4a), dem zweiten Grundträgerlager (4a), dem Zwischenträgerlager (4b) und/oder dem Anbindungsträgerlager (4c) parallel zu der Führung ein Längenmesssystem und/oder Positionsbestimmungssystem (14, 15), vorzugsweise ein magnetisches Längenmessystem und/oder Positionsbestimmungssystem, angeordnet ist.

11. Aufnahmevorrichtung nach einem der vorhergehenden Ansprüche, **dadurch gekennzeichnet, dass** zumindest das erste Grundträgerlager (4a) und das zweite Grundträgerlager (4a) parallel zueinander angeordnet sind.

12. Aufnahmevorrichtung nach einem der vorhergehenden Ansprüche, **dadurch gekennzeichnet, dass** alle Grundträger (6) einen identischen Aufbau aufweisen.

## Claims

1. An accommodating device for accommodating an arbitrarily shaped object (5), comprising a base frame (1),
at least one first base carrier support (4a), which is arranged at the base frame (1) and includes two guides,
on which at least one first base carrier (6) is displaceable on a first carrier displacement unit (11a) by way of a first base carrier drive (6a), and
a second base carrier (6), supported on a second carrier displacement unit (11a), is displaceable by way of the first base carrier drive (6a) or by way of a second base carrier drive (6a),
a third base carrier (5), arranged on a third carrier displacement unit (11a), being displaceable on the first base carrier support (4a) by way of a third base carrier drive (6a), by way of the first base carrier drive (6a) or by way of the second base carrier drive (6a), or
the third base carrier (6) being arranged on a second base carrier support (4a), which is arranged at the base frame (1) and includes two guides, on a third carrier displacement unit (11a) and being displaceable by way of the third base carrier drive (6a), wherein
an intermediate carrier support (4b) is arranged at each of the base carriers (6), along which an intermediate carrier (19) is displaceable with an intermediate carrier displacement unit (11b) by way of an intermediate carrier drive (6b) at the respective base carrier (6), wherein
a connecting carrier displacement unit (11c) is arranged on the intermediate carrier (19), by way of which a connecting carrier support (4c) is displaceable with an end-face tool holder (23) by way of a connecting drive (6c),
so that the arbitrarily shaped object (5) can always be received by at least three determination elements arranged at the tool holders (23) of the base carriers (6),
**characterized in that**
the base frame (1), having a box design and comprising a guide for media via cables and hoses in the interior, is supported in the vertical on a substructure made of two pedestals (2).

2. The accommodating device according to claim 1, **characterized in that** at least one of the base carrier drives (6a), the intermediate carrier drive (6b) and the connecting drive (6c) are arranged and designed in such a way that the base carrier (6), the intermediate carrier displacement unit (11b) and/or the tool holder (23) are displaceable at an angle different from 0° with respect to one another in a linear movement.

3. The accommodating device according to claim 1 or claim 2, **characterized in that** the base carrier support (4a), the intermediate carrier support (4b) and the connecting carrier support (4c) are aligned and arranged at an angle between 70° and 110°, preferably 80° and 100°, and particularly preferably 90° with respect to one another.

4. The accommodating device according to any one of the preceding claims, **characterized in that** at least one of the tool holders (23) is designed so as to be rotatable about an axis of rotation, wherein a determination element attached to the tool holder (23) preferably is arranged so that a contact with the object is located outside the axis of rotation.

5. The accommodating device according to claim 4, **characterized in that** the axis of rotation is located centrically with respect to the tool holder (23).

6. The accommodating device according to any one of the preceding claims, **characterized in that** a fine adjustment unit (36) is arranged at one of the connecting carrier supports (4c) and an associated tool holder (23).

7. The accommodating device according to any one of the preceding claims, **characterized in that** the tool holder (23) comprises a clamping device, a permanent magnet, a solenoid and/or a pin for receiving the object (5) to be held.

8. The accommodating device according to any one of the preceding claims, **characterized in that** the tool holder (23) and/or a received tool are configured so as to be actuatable pneumatically, hydraulically or by an electric motor.

9. The accommodating device according to any one of the preceding claims, **characterized in that** at least one of the base carrier drives (6a), the intermediate carrier drive (6b) and/or the connecting drive (6c) are designed as a spindle-like drive, and in particular as a recirculating ball screw drive or as a trapezoidal thread spindle drive, or as a linear kinematic drive.

10. The accommodating device according to any one of the preceding claims, **characterized in that** a longitudinal measuring system and/or position determination system (14, 15), preferably a magnetic longitudinal measuring system and/or position determination system, are arranged at the first base carrier support (4a), the second base carrier support (4a), the intermediate carrier support (4b) and/or the connecting carrier support (4c), parallel to the guide.

11. The accommodating device according to any one of the preceding claims, **characterized in that** at least the first base carrier support (4a) and the second base carrier support (4a) are arranged parallel to one another.

12. The accommodating device according to any one of the preceding claims, **characterized in that** all base carriers (6) have an identical design.

## Revendications

1. Dispositif de réception destiné à accueillir un objet de forme quelconque (5) comprenant un cadre de base (1),
au moins un premier palier de support de base (4a) disposé sur le cadre de base (1) doté de deux guides,
sur lesquels au moins un premier support de base (6) est monté sur une première unité de déplacement de support (11a), qui peut être déplacée via un premier entraînement de support de base (6a), et
un deuxième support de base (6) monté sur une deuxième unité de déplacement de support (11a), qui peut être déplacée via le premier entraînement de support de base (6a) ou via un deuxième entraînement de support de base (6a), dans lequel
un troisième support de base (5) disposé sur une troisième unité de déplacement de support (11a) peut être déplacé sur le premier palier de support de base (4a) par un troisième entraînement de support de base (6a), par le premier entraînement de support de base (6a) ou par le deuxième entraînement de support de base (6a) ou
le troisième support de base (6) est disposé sur un deuxième palier de support de base (4a) agencé sur le cadre de base (1) avec deux guides sur une troisième unité de déplacement de support (11a) et peut être déplacé par le troisième entraînement de support de base (6a), dans lequel
un palier de support intermédiaire (4b) est disposé sur chacun des supports de base (6), le long desquels un support intermédiaire (19) avec une unité de déplacement de support intermédiaire (11b) peut être déplacé au moyen d'un entraînement de support intermédiaire (6b) sur le support de base (6) respectif, dans lequel
une unité de déplacement de support de connexion (11c) est agencée sur le support intermédiaire (19), au moyen duquel un palier de support de connexion (4c) avec un porte-outil (23) du côté frontal peut être déplacé par un entraînement de connexion (6c),
de sorte que l'objet (5) de forme quelconque puisse toujours être saisi par au moins trois éléments disposés sur les porte-outils (23) des supports de base (6),
**caractérisé en ce que**
le cadre de base (1) est en forme de caisson avec un guide pour les médias via des câbles et des tuyaux à l'intérieur et est monté verticalement sur une sous-structure composée de deux bases (2).

2. Dispositif de réception selon la revendication 1, **caractérisé en ce qu'**au moins l'un parmi les entraînements de support de base (6a), l'entraînement de support intermédiaire (6b) et l'entraînement de connexion (6c) est disposé et formé de telle sorte que le support de base (6), l'unité de déplacement de support intermédiaire (11b) et/ou le porte-outil (23) puissent être déplacés selon un mouvement linéaire à un angle différent de 0°.

3. Dispositif de réception selon la revendication 1 ou 2, **caractérisé en ce que** le palier de support de base (4a), le palier de support intermédiaire (4b) et le palier de support de connexion (4c) sont alignés et disposés les uns par rapport aux autres à un angle compris entre 70° et 110°, de préférence 80° et 100°, en particulier de préférence de 90°.

4. Dispositif de réception selon l'une quelconque des revendications précédentes, **caractérisé en ce qu'**au moins un des porte-outils (23) est conçu pour pouvoir tourner autour d'un axe de rotation, dans lequel un élément disposé sur le porte-outil (23) est de préférence agencé de telle sorte qu'un contact avec l'objet se situe en dehors de l'axe de rotation.

5. Dispositif de réception selon la revendication 4, **caractérisé en ce que** l'axe de rotation est centré sur le porte-outil (23).

6. Dispositif de réception selon l'une quelconque des revendications précédentes, **caractérisé en ce qu'**une unité de réglage fin (36) est disposée sur l'un des paliers de support de connexion (4c) et d'un porte-outil associé (23).

7. Dispositif de réception selon l'une quelconque des revendications précédentes, **caractérisé en ce que** le porte-outil (23) comporte un dispositif de serrage, un aimant permanent, un électroaimant et/ou une broche pour recevoir l'objet (5) à tenir.

8. Dispositif de réception selon l'une quelconque des revendications précédentes, **caractérisé en ce que** le porte-outil (23) et/ou un outil reçu sont conçus pour être actionnés pneumatiquement, hydrauliquement ou électriquement.

9. Dispositif de réception selon l'une quelconque des revendications précédentes, **caractérisé en ce qu'**au moins l'un des entraînements de support de base (6a), de l'entraînement de support intermédiaire (6b) et/ou de l'entraînement de connexion (6c) est/sont conçu(s) comme un entraînement en forme de broche, en particulier comme un entrainement par vis à billes ou un entraînement de broche à filetage trapézoïdal, ou comme entraînement cinématique linéaire.

10. Dispositif de réception selon l'une quelconque des revendications précédentes, **caractérisé en ce que** un système de mesure de longueur et/ou un système de détermination de position (14, 15), de préférence un système de mesure de longueur magnétique et/ou un système de détermination de position, est disposé sur le premier palier de support de base (4a), le deuxième palier de support de base (4a), le palier de support intermédiaire (4b) et/ou le palier de support de connexion (4c) parallèlement au guide.

11. Dispositif de réception selon l'une quelconque des revendications précédentes, **caractérisé en ce qu'**au moins le premier palier de support de base (4a) et le deuxième palier de support de base (4a) sont disposés parallèlement l'un à l'autre.

12. Dispositif de réception selon l'une quelconque des revendications précédentes, **caractérisé en ce que** tous les supports de base (6) présentent une structure identique.
